**Europäisches Patentamt**

**European Patent Office**

**Office européen des brevets**

(11) Numéro de publication : **0 387 459 B1**

(12) **FASCICULE DE BREVET EUROPEEN**

(19)

(45) Date de publication du fascicule du brevet :
**25.11.92 Bulletin 92/48**

(21) Numéro de dépôt : **89402757.2**

(22) Date de dépôt : **06.10.89**

(51) Int. Cl.⁵ : **G01P 3/44**

(54) **Montage de palier antifriction à capteur d'informations amovible.**

(30) Priorité : **24.02.89 US 315624**

(43) Date de publication de la demande :
**19.09.90 Bulletin 90/38**

(45) Mention de la délivrance du brevet :
**25.11.92 Bulletin 92/48**

(84) Etats contractants désignés :
**DE ES GB IT SE**

(56) Documents cités :
**EP-A- 0 213 732**
**US-A- 3 061 386**
**US-A- 4 002 937**
**US-A- 4 259 637**
**US-A- 4 732 494**

(72) Inventeur : **Grillo, John M.**
**44 Winesap Run**
**Torrington CT 06790 (US)**
Inventeur : **Hilby, James A.**
**58 Taft Circle Road**
**Watertown CT 06795 (US)**
Inventeur : **Van Vern, Fleet**
**14 Michael Terrace**
**Wolcott CT 06716 (US)**
Inventeur : **Gardella, Cameron G.**
**Judson Avenue**
**Woodbury CT 06795 (US)**
Inventeur : **Hill, Gary J.**
**56 Wickhams Fancy**
**Collinsville CT 06022 (US)**

(74) Mandataire : **Ernst-Schonberg, Michel et al**
**REGIE NATIONALE DES USINES RENAULT (S.**
**0267) 8 & 10, avenue Emile Zola**
**F-92109 Boulogne Billancourt Cédex (FR)**

(73) Titulaire : **S.N.R. ROULEMENTS**
**Boîte Postale 17 1, rue des Usines**
**F-74010 Annecy Cédex (FR)**

## Description

La présente invention concerne un montage de palier antifriction à capteur d'informations amovible.

L'invention concerne plus particulièrement les paliers utilisés conjointement avec un codeur annulaire fixé à un arbre tournant et avec un capteur de vitesse fixé de manière amovible sur un élément fixe coaxial au codeur, dans lesquels le capteur détecte le passage des pôles magnétiques alternés du codeur.

L'invention s'applique avantageusement aux paliers d'arbres des roues arrière d'un véhicule.

La publication EP-A-0319355 décrit un palier constitué par un arbre rotatif entouré par une bague de roulement, dont les corps roulants sont disposés entre lesdits arbre et bague et dans lequel un capteur porté par un support fixé à la bague est radialement distant d'un codeur magnétique multipôle porté par l'arbre rotatif.

Des modes de fixation d'un codeur magnétique sur un moyeu tournant sont décrits dans la publication EP-A-0213732.

Un problème lié à l'état de la technique tient au fait que le capteur est habituellement monté sur le roulement ou à proximité immédiate de celui-ci et constitue de ce fait un élément du roulement. Dans ces conditions, l'accès au capteur au cours d'une réparation ou d'un entretien exige le démontage d'organes avoisinants. On constate ainsi que la suppression d'un défaut du capteur nécessite le remplacement total du roulement.

Par ailleurs, lorsque le codage est assuré par l'effet de la concentration du flux magnétique soit dans les dents d'une roue dentée ou roue phonique, soit par un codeur magnétique annulaire constitué de résine synthétique fixé à un arbre rotatif, il est souvent nécessaire d'enlever la roue dentée ou le codeur magnétique de l'arbre au cours des interventions de réparation sur le capteur.

L'invention a ainsi pour objet un palier à capteur d'informations amovible dans le but de faciliter les dépannages et le remplacement du seul capteur tandis que le codeur est soutenu mécaniquement sur le palier.

Le montage de palier antifriction constitué par une bague extérieure de roulement étagée à deux parties de diamètres différents, une pluralité de corps roulants et un codeur magnétique multipôle annulaire à pôles nord et sud alternés engendrant un signal magnétique logé conjointement avec les corps roulants dans ladite bague et un arbre tournant traversant cette même bague, est caractérisé par le fait que le codeur est monté sur une bague de retenue emmanchée à force sur l'arbre tournant et qu'un dispositif d'attache rapide du capteur sur la bague extérieure du roulement est centré sur le codeur.

D'autres caractéristiques et avantages de l'invention apparaîtront à la lecture de la description qui suit faite en référence du dessin annexé dans lequel :

La figure 1 est une vue en coupe longitudinale d'un montage de palier conforme à l'état de la technique.

La figure 2 est une vue en coupe longitudinale de la forme de réalisation préférentielle du palier selon l'invention.

La figure 3 est une vue éclatée du palier illustré sur la Figure 2.

La figure 4 est une coupe transversale du dispositif de fixation du capteur illustré sur les Figures 2 et 3, suivant la ligne 4-4 de la figure 2.

La figure 5 est une vue en coupe longitudinale agrandie du palier selon la ligne 5-5 de la figure 4

La figure 6 est une perspective du capteur et de son support illustrés sur les Figures 4 et 5.

La figure 7 est une représentation perspective de la forme de réalisation préférentielle de la bague de retenue du codeur.

La figure 8 est une représentation perspective de l'ensemble monté constitué par le codeur magnétique annulaire et de la bague de retenue.

La figure 9 est une représentation perspective d'une forme de réalisation modifiée de la bague de retenue du codeur.

La figure 10 est une autre représentation perspective d'une forme de réalisation de l'ensemble monté constitué par la bague de retenue selon la figure 9 et du codeur magnétique annulaire.

La figure 11 est une représentation perspective avec arrachement de la forme de réalisation préférentielle du joint de palier.

La figure 12 est une autre représentation perspective d'une forme de réalisation modifiée du joint.

La figure 13 décrit une autre variante de réalisation du joint représenté à la figure 12 ou 11.

La figure 14 est un montage d'application du joint en coupe longitudinale.

Les figures 15 à 19 sont des vues de face des différentes formes de réalisation du dispositif de fixation du capteur comparable à celui de la figure 4.

La figure 20 est une vue en coupe longitudinale d'une forme de réalisation modifiée du palier.

Dans ce qui suit, les éléments et organes semblables sont repérés par les mêmes références sur les différentes figures.

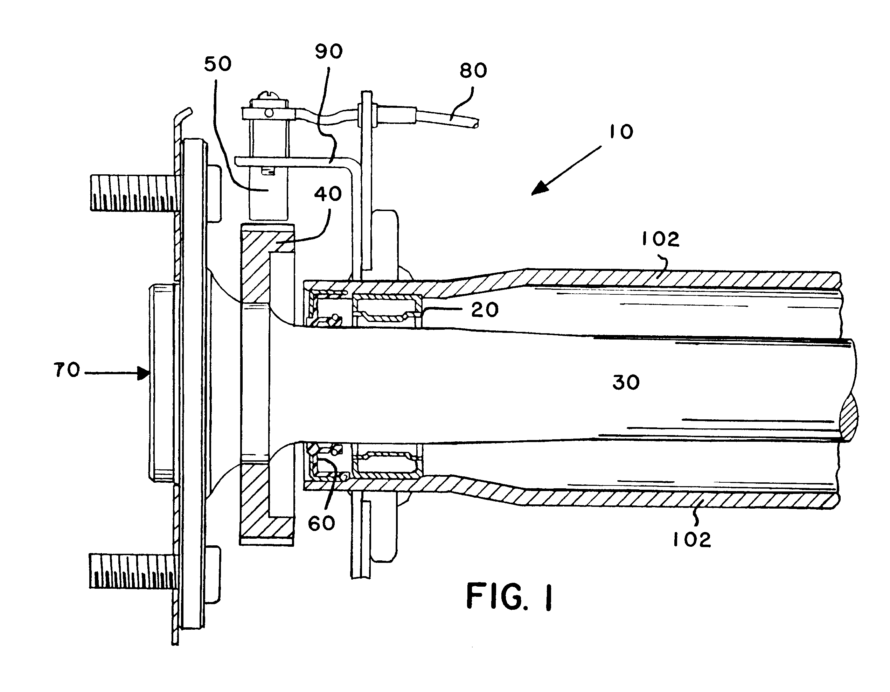

Si l'on se reporte aux dessins, et plus particulièrement à la Figure 1, le montage 10 du palier conforme à l'état de la technique comporte un palier radial 20 monté sur un arbre 30, une roue phonique magnétique 40, un capteur 50 détectant les perturbations du champ magnétique provoquées par le passage des dents de la roue phonique 40 devant le capteur 50, un joint 60 et un ensemble moyeu de roue 70. Le signal de sortie électrique du capteur 50 est transmis par le conducteur 80 et le capteur 50 est maintenu centré sur la roue phonique 40 par un support 90.

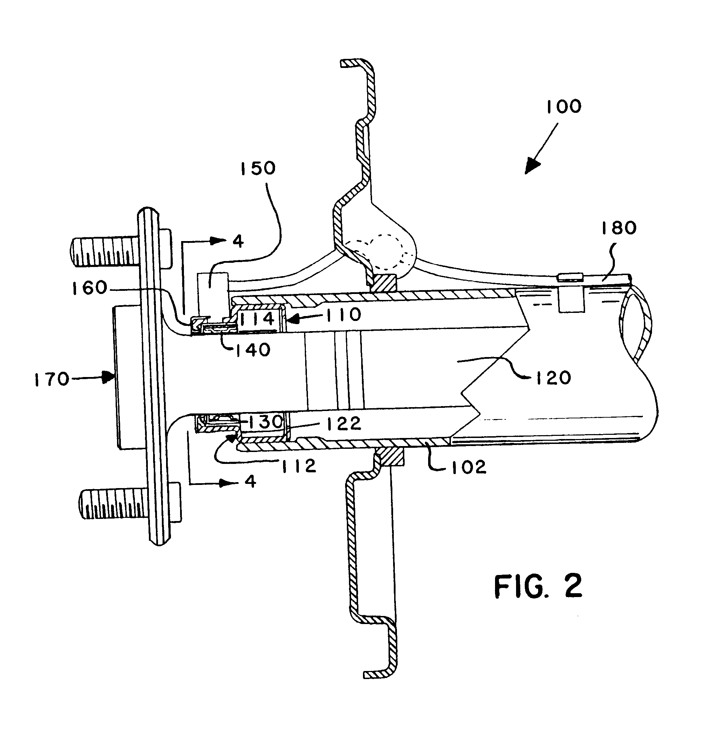

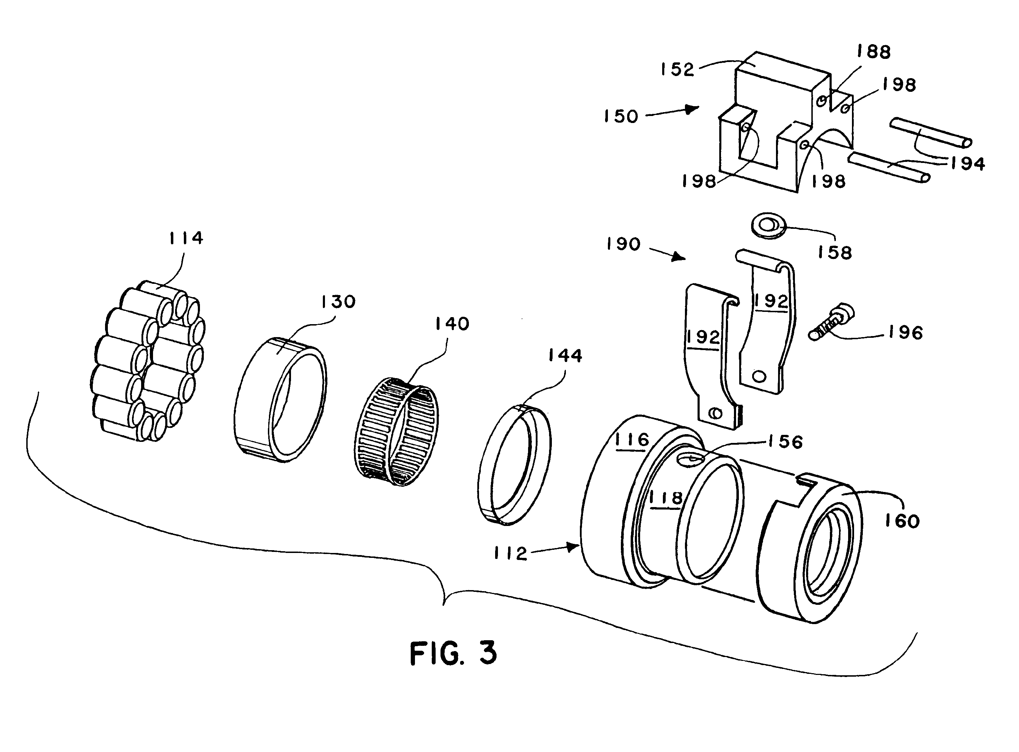

En référence aux figures 2 et 3 qui montrent la forme de réalisation préférentielle du montage 100. Un palier radial 110 est monté dans un tube d'essieu 102 autour d'un arbre 120. Un codeur magnétique annulaire 130 est monté sur une bague de retenue 140. Un capteur 150 détecte le signal magnétique codé du codeur annulaire 130. L'ensemble possède également un joint 160 disposé dans la bague 112 qui protège notamment les corps roulants le codeur et sa bague de retenue, un ensemble moyeu de roue 170 et un conducteur de sortie 180, qui transmet le signal de sortie du capteur 150. L'ensemble capteur 150 est fixé de manière amovible à une bague extérieure 112 par un dispositif d'attache rapide 190. L'ensemble moyeu de roue 170 est monté du côté extérieur du montage 100.

Le palier radial 110 possède un ensemble de corps roulants 114, logé dans la bague extérieure 112. Les corps roulants 114 pourront par exemple être maintenus dans une cage. La bague extérieure 112 étagée à deux parties possède une partie de grand diamètre 116 et une partie de petit diamètre 118. La partie de petit diamètre 118 porte une rondelle à rebord 144 disposée à son extrémité axiale extérieure à proximité du joint 160, de manière à constituer une surface de butée pouvant recevoir les efforts de poussée lors du montage de l'arbre 120 dans la bague extérieure 112 et l'effort de poussée relativement réduit engendré par le mouvement axial limité du codeur magnétique annulaire 130. La rondelle 144 assure le maintien axial de la bague 140 et du codeur annulaire 130 lorsque l'on enlève le joint 160 de la bague 112, par exemple pour l'entretien ou le remplacement. Un épaulement 122 réunit les parties 116 et 118 et constitue une surface recevant l'effort de poussée des corps roulants 114. Le codeur annulaire 130 et la bague de retenue 140 dans la partie 118 sont ainsi isolés de l'effort de poussée axial des corps roulants.

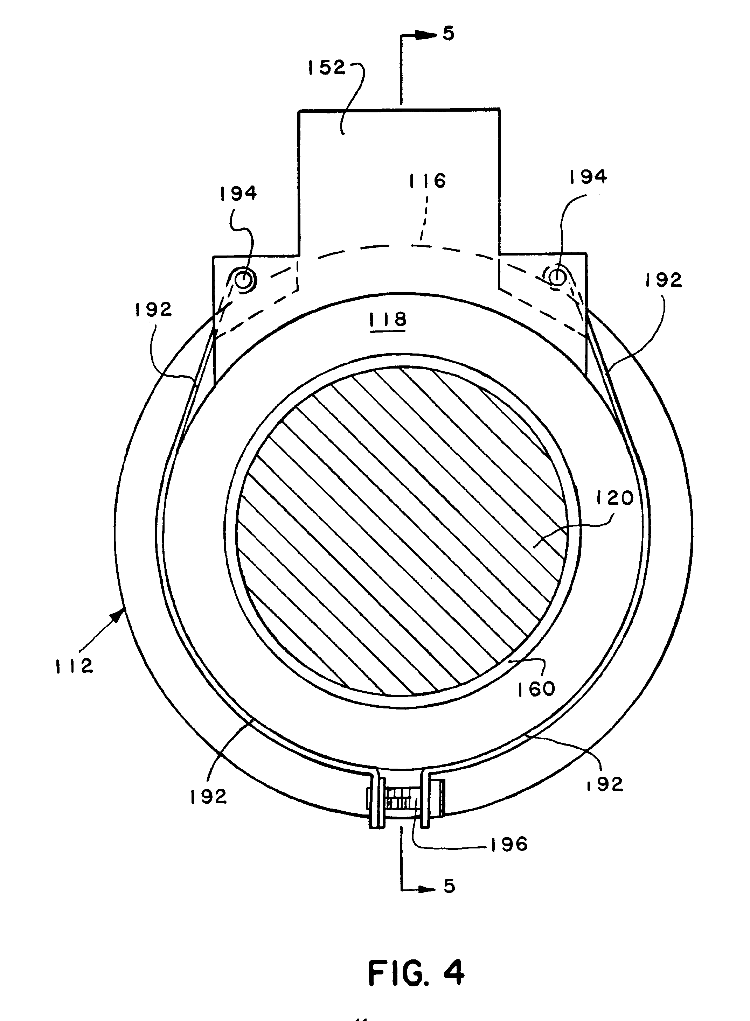

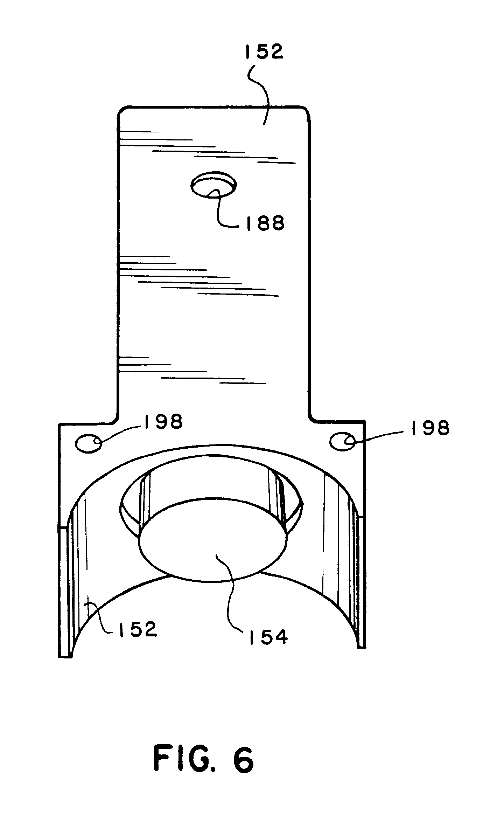

Si l'on se reporte à présent aux figures 3 à 6, l'ensemble capteur 150 est constitué par un support de capteur 152 et du capteur proprement dit 154. Le capteur 154 dépasse du fond du support 152 (figure 6), de manière à s'encastrer dans un orifice radial 156 de la partie du petit diamètre 118 de la bague extérieure 112. Un joint circulaire 158 est monté autour du capteur 154 et repose sur la partie 118 de la bague extérieure à la périphérie de l'orifice 156. Comme on le voit sur les figures 3, 4 et 6, la surface inférieure du support 152 est courbe, de manière à envelopper en partie la surface extérieure de la partie 118 de la bague extérieure. Le capteur 154 est un capteur à effet Hall dans la forme de réalisation préférentielle, mais ne se limite pas cependant à cette technique de réalisation.

Le dispositif d'attache rapide 190 comporte deux attaches 192, deux broches 194 pour fixer les attaches 192 au support de capteur 152 et un élément d'assemblage 196 pour fixer les attaches 192 l'une à l'autre par leurs extrémités opposées au support de capteur 152. Le support de capteur 152 possède des oreilles percées par quatre trous alésés 198, d'insertion des broches 194. Chaque broche 194 est maintenue dans une paire de trous 198 du support 152, de manière à laisser apparente la partie centrale de la broche pour immobiliser l'attache 192 correspondante. Le support de capteur 152 possède également un orifice 188 au travers de sa face latérale pour faciliter le passage du fil conducteur de sortie 180. On remarquera que l'orifice 188 peut être pratiqué en n'importe quel point du support 152 permettant de passer le fil de sortie 180 et de l'acheminer de façon appropriée vers la destination desirée.

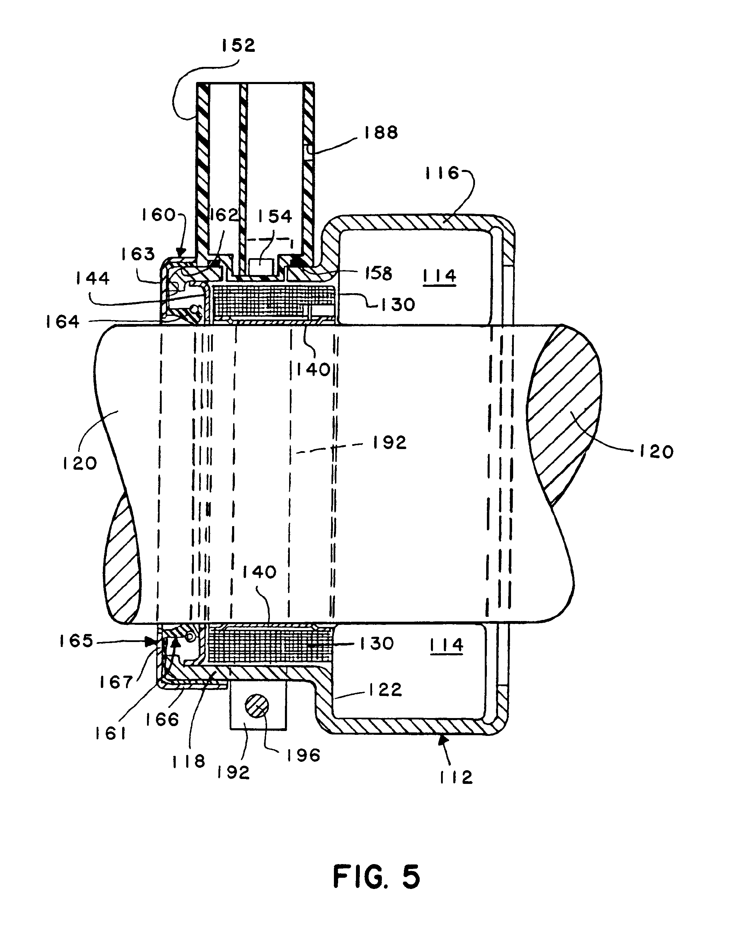

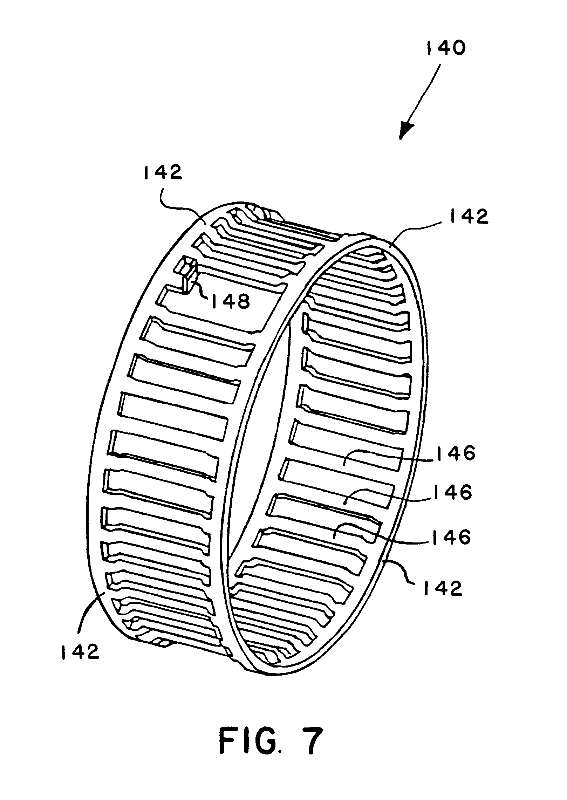

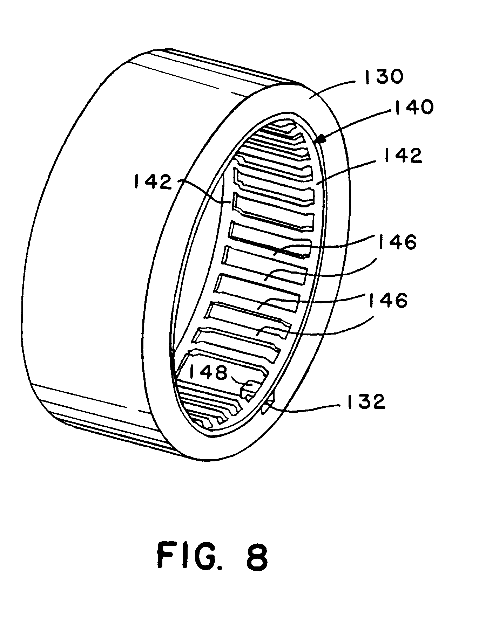

Si l'on se reporte à présent à présent aux figures 7 et 8, on y trouvera représentée la forme de réalisation préférentielle de la bague de retenue 140 du codeur 130. La bague 140 comporte deux rebords d'extrémité 142, réunis par une pluralité de barres 146. Ces barres sont légèrement courbées vers l'intérieur (figure 5, 7), de manière à permettre le montage à force de la bague de retenue 140 sur l'essieu ou l'arbre tournant 120. On peut modifier de nombreuses façons la configuration des rebords d'extrémité 142 et des barreaux 146, pour obtenir l'effort désiré dans l'emmanchement serré de la bague de retenue 140 sur l'arbre 120. L'un des barreaux 146 au moins est en partie coupé partiellement recourbé vers l'extérieur dans le sens radial, comme l'illustre le barreau partiel 148 de la figure 7. Le barreau partiel 148 est ensuite engagé dans une rainure 132 de la portée du codeur magnétique annulaire 130, immobilisant ainsi en rotation ce dernier sur la bague de retenue 140. La bague 140 est fermement fixée à l'arbre 120 et le codeur annulaire 130 est fixé sur la bague de retenue 140, afin que le codeur magnétique annulaire 130 tourne avec l'arbre 120.

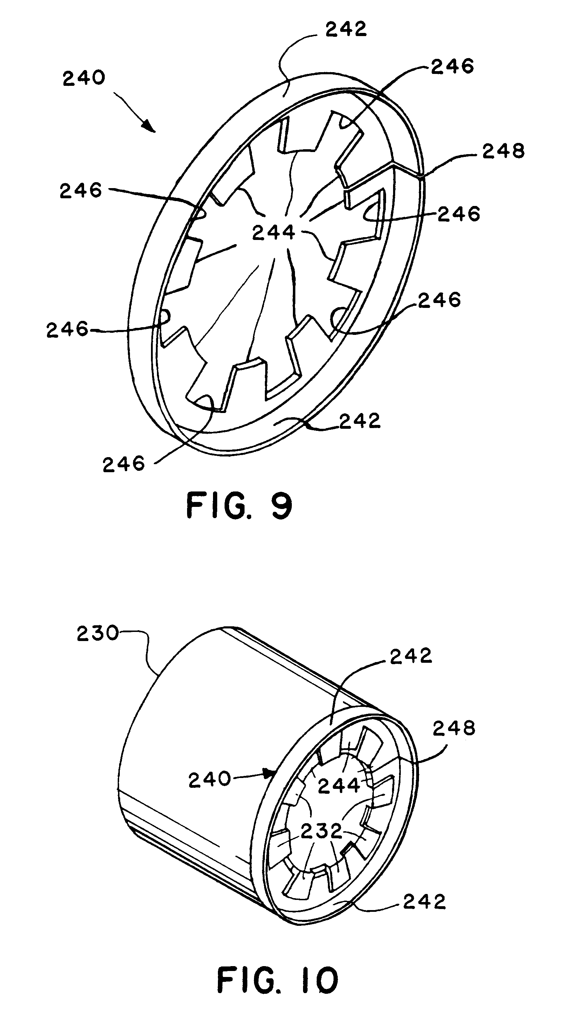

Les figures 9 et 10 représentent des systèmes modifiés de maintien du codeur magnétique annulaire 230 sur l'arbre 120. La bague 240 de retenue modifiée du codeur comporte une partie cylindrique 242 axiale et une partie radiale qui s'étend vers l'intérieur à partir d'une des extrémités de la partie 242 sous la forme de dents crénelées 244 et d'espaces 246 interdentaires. Les dents 244 s'emmanchent sans jeu sur l'arbre 120, fixant ainsi étroitement la bague 240 à l'arbre.

La bague 240 est fendue radialement en 248, ce qui permet son expansion lors du montage sur l'arbre ou l'essieu. Le codeur magnétique annulaire 230 se monte sur la bague de retenue 240 à l'aide de plusieurs doigts 232 s'étendant dans le sens radial des espaces 246 (figure 10). Les doigts 232 assurent l'accouplement radial entre la bague 240 et le codeur annulaire 230, de manière à ce que ce dernier tourne avec l'arbre 120. Les doigts 232 peuvent également limiter le mouvement axial du codeur annulaire 230 par accrochage, dans la bague de retenue 240. Le mouvement axial du codeur 230 est normalement limité par la bague extérieure 112. On pourra également limiter le mouvement axial du codeur magnétique annulaire 230 en montant des bagues de retenue 240 aux deux extrémités de ce dernier. Dans ce cas, le codeur annulaire 230 comportera des doigts aux deux extrémités axiales pour s'engager dans les espaces 246 des deux bagues de retenue 240.

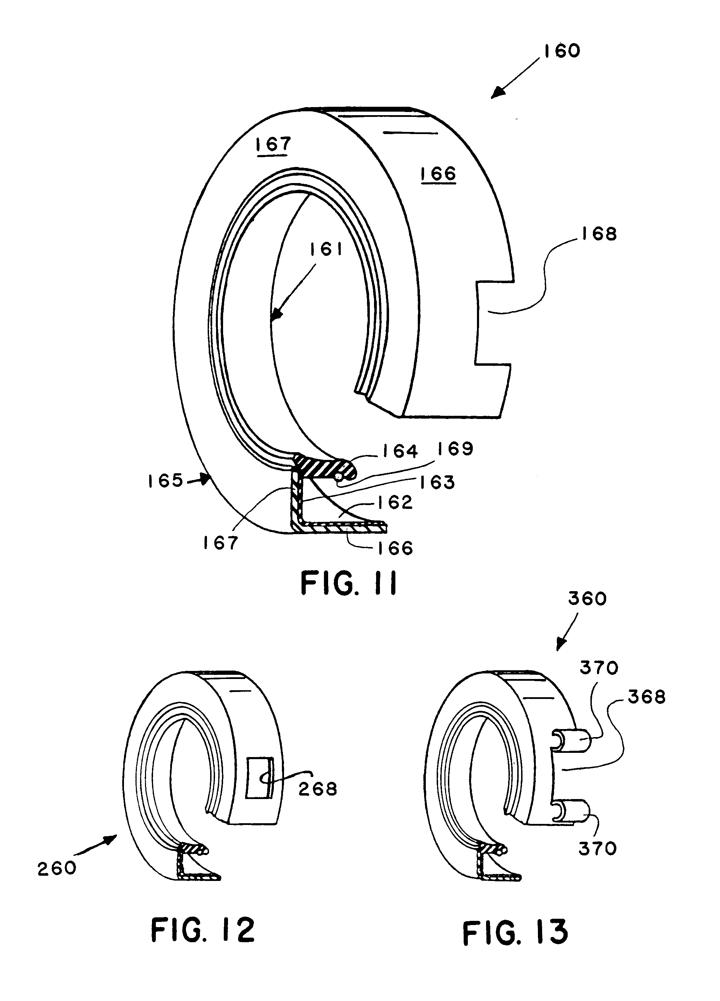

La figure 11 illustre la forme de réalisation préférentielle du joint 160 de la présente invention. Le joint comporte un élément d'étanchéité 161 et un support métallique 165. L'élément d'étanchéité 161 possède une partie annulaire extérieure 162, une partie radiale 163 et une partie annulaire intérieure 164. L'élément d'étanchéité 161 est réalisé en caoutchouc ou un matériau analogue. On pourra également le réaliser en un matériau élastomère approprié. Un ressort torique 169 presse la partie annulaire 164 sur l'arbre 120. Le support métallique 165 possède également une partie annulaire extérieure 166 et une partie radiale 167. Les parties 166 et 167 sont réunies sans jeu avec la partie annulaire extérieure 162 et la partie radiale 163 de l'élément d'étanchéité 161. Le support métallique 165 assure une protection supplémentaire notamment contre l'humidité et les polluants divers de l'élément d'étanchéité 161 et des pièces à l'intérieur de la bague extérieure 112.

Les parties annulaires 162 et 166 assurent un ajustement serré sur la surface extérieure de l'extrémité de la bague 112 (figure 5). Un évidement rectangulaire 168 est prévu sur le bord intérieur des parties 162 et 166 et reçoit le support de capteur 152.

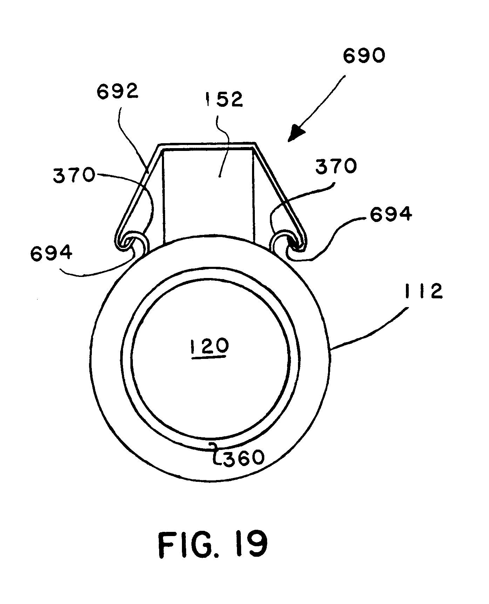

Les figures 12 et 13 illustrent deux formes de réalisation modifiées du joint. Le joint 260 de la figure 12 comporte un évidement modifié 268 à quatre côtés, percé dans les parties 162 et 166. Les joints 160 et 260 sont par ailleurs identiques. Le joint 360 illustré par la figure 13 possède un évidement 368 analogue à l'évidement 168 de la figure 11 et deux crochets adjacents recourbés 370 permettent de lier le support de capteur 152 au joint 360. La figure 19 illustre un dispositif de fixation 690 pouvant s'accoupler au joint 360 par accrochage sur les crochets 370.

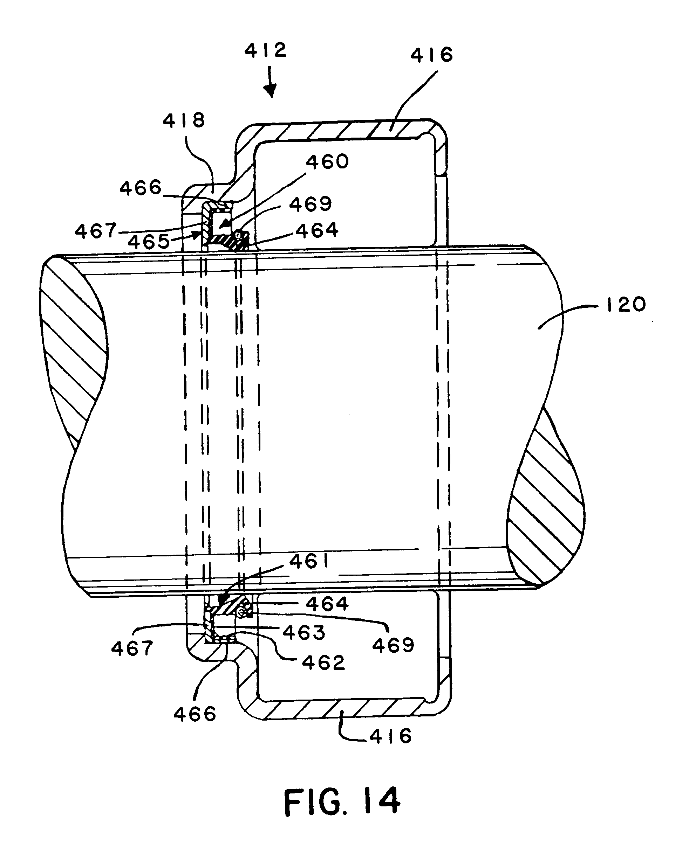

La figure 14 illustre une autre forme de réalisation du joint 460, qui fait appel à une bague extérieure 412, analogue à la bague extérieure 112 de la figure 2, en deux parties : une de grand diamètre 416 et une de petit diamètre 418. Le joint 460 est logé à l'intérieur de la partie de petit diamètre 418, de manière à isoler l'espace annulaire entre l'arbre 120 et la bague 412. Le joint 460 porte un élément d'étanchéité 461 et un support métallique 465. L'élément d'étanchéité 461 comprend une partie annulaire extérieure 462, une partie radiale 463 et une partie annulaire intérieure 464. Le support métallique 465 comprend une partie annulaire extérieure 466 et une partie radiale 467. Un ressort torique 469 presse la partie 464 contre l'arbre 120. On remarquera que l'on peut prolonger au besoin dans le sens axial la partie 418 pour incorporer dans la bague 412 les corps roulants 414 ou un codeur annulaire.

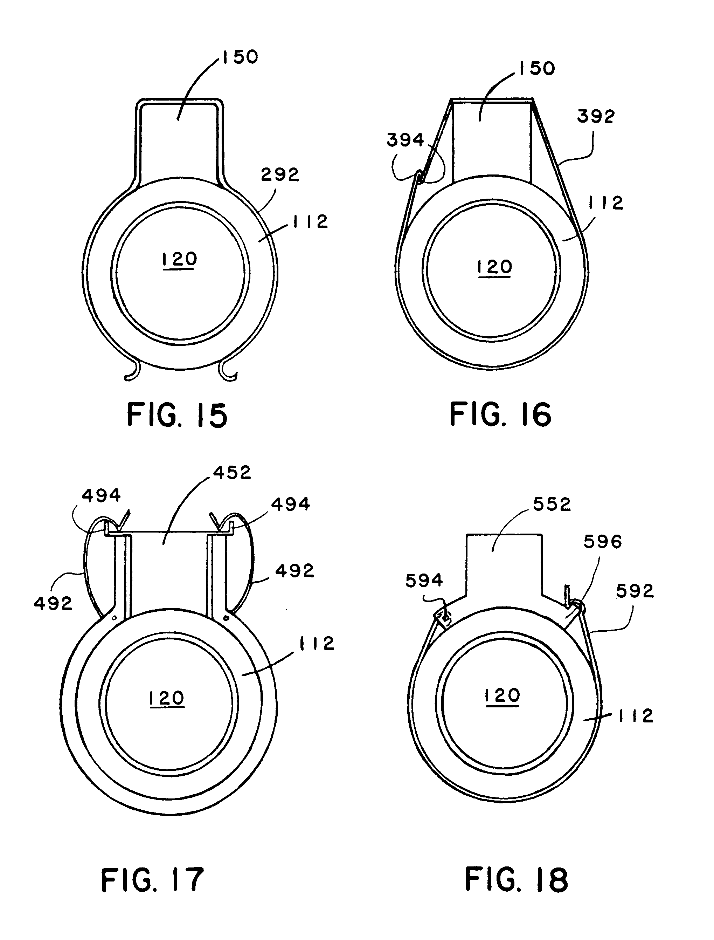

Les figures 15 à 19 représentent des vues de face des formes de réalisation modifiées du dispositif de fixation 190 du capteur sur la bague 112 illustré sur les figures 3 à 6. La figure 15 illustre une attache d'une seule pièce 292 qui entoure le capteur 150 et la bague extérieure 112 sans aucun autre élément d'assemblage du type vis ou boulon. La figure 16 illustre une attache d'une seule pièce 392 à crochets d'extrémités 394 qui se monte autour du capteur et de la bague extérieure. Les deux extrémités de l'attache 392 sont réunies par les deux crochets 394.

La figure 17 illustre une attache en deux parties 492 accrochées sur des brides 494, sur les faces supérieures du support 452 du capteur. La figure 18 représente une attache d'une seule pièce 592 dont les deux extrémités se fixent au support 552 du capteur à l'aide d'une broche 594 prévue sur l'un des côtés du support 552, et accrochée sur une bride 596 à l'autre côté du support 552. Le dispositif d'accrochage 690 de la figure 19 fait appel à une attache modifiée 692, adaptée au joint modifié 360 de la figure 13. Les deux crochets d'extrémité 694 de l'attache 692 s'accouplent aux deux crochets recourbés 370 du joint 360.

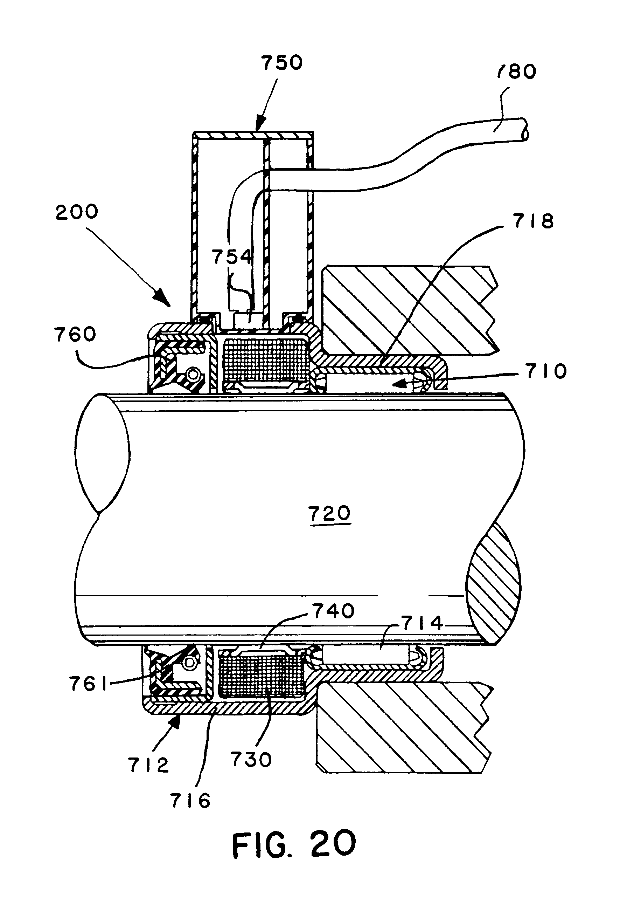

La figure 20 représente un palier modifié 200 constitué par un roulement radial 710 monté sur l'arbre 720 et logé dans la partie de petit diamètre 718 de la bague extérieure 712, d'un codeur magnétique annulaire 730, d'une bague de retenue du codeur 740, (de structure analogue à celle de la bague 140) d'un ensemble capteur 750, d'un joint 760, d'un fil de sortie 780 issu du capteur 754 et d'un dispositif de fixation non représenté analogue à celui montré sur les figures 2 et 3. On remarquera que les corps roulants 714 sont logés dans la partie de petit diamètre 718 et non dans celle de grand diamètre 716. La bague de retenue du codeur 740 et le codeur magnétique annulaire 730 sont logés dans la partie de grand diamètre 716. Le joint 760 analogue à la forme de réalisation modifiée du joint illustrée sur la figure 14, possède un élément d'étanchéité 761 situé à l'intérieur de la partie de grand diamètre 716 de la bague extérieure 712. Le palier modifié 200 convient de la sorte aux applications de montage sous des charges plus faibles.

## Revendications

1. Montage de palier antifriction à capteur d'informations amovible constitué par une bague extérieure (112, 412, 712) de roulement étagée à deux parties (116, 118, 416, 418, 716, 718) de diamètres différents, une pluralité de corps roulants (114, 414, 714), et un codeur (130, 730) magnétique multipôle annulaire à pôles nord et sud alternés monté sur une bague de retenue (140, 240, 740) emmanchée à force sur l'arbre tournant (120, 720) et engendrant un signal magnétique, logé conjointement avec les corps roulants dans ladite bague et un arbre tournant (120, 720) traversant cette même bague et dans lequel un dispositif de fixation (190, 690) amovible d'un ensemble capteur (150, 750) sur la bague extérieure (112, 412, 712) du roulement est centré sur le codeur.

2. Montage selon la revendication 1, caractérisé en ce qu'il comporte en outre un joint d'étanchéité (160, 260, 360, 460, 760) dans la bague extérieure (112, 412, 712), de manière à protéger notamment le palier, le codeur (130, 230, 730) annulaire et sa bague de retenue (140, 240, 740).

3. Montage selon la revendication 1, caractérisé en ce qu'un moyen empêchant les corps roulants (114, 414) de gêner le bon fonctionnement du codeur magnétique annulaire (130) est constitué par un épaulement (122), situé entre les deux parties (116, 118, 416, 418) de la bague extérieure (112, 412) contre lequel s'appuient lesdits corps roulants (114, 414) et qui les sépare du codeur annulaire (130).

4. Montage selon la revendication 1 caractérisé par le fait que la bague de retenue (140, 740) du codeur utilisée conjointement avec un codeur magnétique annulaire (130, 730) sur un arbre tournant (120, 720), comporte deux rebords d'extrémité (142) annulaires réunis par plusieurs barreaux (146) conçus de manière à assurer le montage à force sur ledit arbre (120, 720), et un moyen de liaison de la bague de retenue audit codeur annulaire.

5. Montage selon la revendication 1, caractérisé en ce que la liaison du codeur magnétique annulaire (130) avec une bague de retenue (140) à barreaux comporte au moins un barreau (146) en partie coupé, de manière à constituer un barreau (148) recourbé radialement vers l'extérieur, ledit barreau partiel s'engageant dans une rainure (132) ménagée sur la portée du codeur magnétique annulaire (130).

6. Montage selon l'une quelconque des revendications 1 à 5 caractérisé par le fait que le dispositif de fixation amovible est constitué par :
- Un capteur (154, 754), détectant le signal magnétique codé et délivrant un signal de sortie proportionnel à la vitesse de rotation de l'arbre ;

- un support de capteur (152, 452, 552) partiellement enveloppant;
- un dispositif d'attache (190, 690) conçu de manière à permettre à la fixation rapide amovible du support de capteur (152, 452, 552) à la partie fixe du palier.

7. Montage selon l'une quelconque des revendications 1 à 6, caractérisé par le fait qu'il comporte un joint (160, 260, 360, 460, 760) qui possède un élément d'étanchéité (161, 461, 761) et un support métallique (165, 465), ledit élément d'étanchéité (161, 461) comportant une partie annulaire extérieure (162, 462,) liée à une partie annulaire intérieure (164, 464) par une partie radiale, ledit élément d'étanchéité étant fixé audit support de manière à ce que la partie annulaire (162) du joint soit montée à force sur la surface extérieure d'une des extrémités axiales de ladite bague extérieure (112).

8. Montage selon la revendication 7, caractérisé par le fait que le joint (760) est monté à l'intérieur d'une des extrémités axiales de ladite bague extérieure (712).

**Patentansprüche**

1. Gleitlageranordnung mit auswechselbarem Meßwertaufnehmer, bestehend aus einem äußeren Lagerring (112, 412, 712), der in zwei Teile (116, 118, 416, 418, 716, 718) unterschiedlichen Durchmessers unterteilt ist, aus einer Vielzahl von Rollkörpern (114, 414, 714) und aus einem mehrpoligen ringförmigen magnetischen Kodierer (130, 730) mit abwechselnd angeordneten Nord- und Südpolen, der auf einem Haltering (140, 240, 740) befestigt ist, welcher im Preßsitz auf einer sich drehenden Welle (120, 720) sitzt und ein magnetisches Signal erzeugt sowie zusammen mit den Rollkörpern im Ring angeordnet ist, wobei die sich drehende Welle (120, 720) diesen Ring durchsetzt während eine auswechselbare Halteanordnung (190, 690) für den Meßwertaufnehmer (150, 750) am äußeren Ring (112, 412, 712) des Lagers am Kodierer zentriert ist.

2. Anordnung nach Anspruch 1, dadurch gekennzeichnet, daß sie außerdem eine Dichtung (160, 260, 360, 460, 760) im äußeren Ring (112, 412, 712) derart aufweist, daß insbesondere das Lager, der ringförmige Kodierer (130, 230, 730) und sein Haltering (140, 240, 740) geschützt sind.

3. Anordnung nach Anspruch 1, dadurch gekennzeichnet, daß eine Anordnung, welche eine Störung der guten Betriebsweise des ringförmigen magnetischen Kodierers (130) durch die Rollkörper (114, 414) verhindert, aus einer Schulter (122) besteht, die zwischen zwei Abschnitten (116, 118, 416, 418) des äußeren Ringes (112, 412) angeordnet ist und auf der sich die Rollkörper (114, 414) abstützen, wodurch diese vom ringförmigen Kodierer (130) getrennt sind.

4. Anordnung nach Anspruch 1, dadurch gekennzeichnet, daß der Haltering (140, 740) für den Kodierer, der zusammen mit einem ringförmigen magnetischen Kodierer (130, 730) auf einer sich drehenden Welle (120, 720) sitzt, zwei ringförmige Endränder (142) aufweist, die durch mehrere Stäbe (146) dergestalt verbunden sind, daß eine Anordnung im Preßsitz auf der Welle (120, 720) gewährleistet ist, wobei eine Verbindungsanordnung den Haltering mit dem ringförmigen Kodierer verbindet.

5. Anordnung nach Anspruch 1, dadurch gekennzeichnet, daß die Verbindung des ringförmigen magnetischen Kodierers (130) mit einem mit Stäben versehenen Haltering (140) wenigstens einen teilweise abgeschnittenen Stab (146) dergestalt aufweist, daß ein radial nach außen gebogener Reststab (148) entsteht, der in eine Nut (132) eingreift, die entlang des Umfangs des ringförmigen magnetischen Kodierers (130) vorgesehen ist.

6. Anordnung nach einem der Ansprüche 1 bis 5, dadurch gekennzeichnet, daß die auswechselbare Halteanordnung aus folgenden Teilen besteht:
    - einem Meßwertaufnehmer (154, 754) zur Messung eines kodierten magnetischen Signals und zur Abgabe eines Ausgangssignals proportional zur Drehgeschwindigkeit der Welle;
    - eine den Meßwertfühler teilweise umgebende Halterung (152, 452, 552;);
    - eine Befestigungsanordnung (190, 690), die derart ausgestaltet ist, daß sie eine schnelle auswechselbare Befestigung der Halterung (152, 452, 552) des Meßwertaufnehmers am feststehenden Lagerabschnitt ermöglicht.

7. Anordnung nach einem der Ansprüche 1 bis 6, dadurch gekennzeichnet, daß sie eine Dichtung (160, 260, 360, 460, 760) aufweist mit einem Dichtteil (161, 461, 761) und einer metallischen Halterung (165, 465), wobei das Dichtteil (161, 461) einen äußeren ringförmigen Abschnitt (162, 462) aufweist, der mit einem inneren ringförmigen Abschnitt (164, 464) über einen radialen Abschnitt verbunden ist und wobei das Dichtteil mit der Halterung dergestalt verbunden ist, daß der ringförmige Abschnitt (162) der Dichtung im Preßsitz auf der Außenfläche eines der axialen Enden des äußeren Ringes (112) sitzt.

8. Anordnung nach Anspruch 7, dadurch gekennzeichnet, daß die Dichtung (760) im Inneren eines der axialen Enden des äußeren Ringes (712) befestigt ist.

## Claims

1. An anti-friction bearing assembly with removable data sensor formed by an external rolling bearing ring (112, 412, 712) which is stepped in two parts (116, 118, 416, 418, 716, 718) of different diameters, a plurality of rolling bodies (114, 414, 714) and an annular multi-pole magnetic encoder (130, 730) with alternate north and south poles rich is mounted on a retaining ring (140, 240, 740) force-fitted on to the rotary shaft (120, 720), for generating a magnetic signal, being accommodated in conjunction with the rolling bodies in said ring, and a rotary shaft (120, 720) which passes through said same ring, and in rich a device (190, 690) for removably fixing a sensor assembly (150, 750) on the external ring (112, 412, 712) of the rolling bearing is centered on the encoder.

2. An assembly according to claim 1 characterised in that it further comprises a sealing member (160, 260, 360, 460, 760) in the external ring (112, 412, 712) so as to protect in particular the bearing, the annular encoder (130, 230, 730) and its retaining ring (140, 240, 740).

3. An assembly according to claim 1 characterised in that a means for preventing the rolling bodies (114, 414) from interferring with good operation of the annular magnetic encoder (130) is formed by a shoulder (122) which is disposed between the two parts (116, 118, 416, 418) of the external ring (112, 412), against which said rolling bodies (114, 414) bear and rich separates them from the annular encoder (130).

4. An assembly according to claim 1 characterised in that the retaining ring (140, 740) for the encoder, which is used in conjunction with an annular magnetic encoder (130, 730) on a rotary shaft (120, 720), comprises two annular end rim portions (142) which are connected by a plurality of bars (146) so designed as to provide for force-fitting on said shaft (120, 720) and a means for connecting the retaining ring to said annular encoder.

5. An assembly according to claim 1 characterised in that the connection of the annular magnetic encoder (130) to a retaining ring (140) with bars comprises at least one bar (146) which is partially cut so as to constitute a bar (148) which is curved radially outwardly, said partial bar engaging into a groove (132) provided on the bearing surface of the annular magnetic encoder (130).

6. An assembly according to any one of claims 1 to 5 characterised in that the removable fixing device is formed by:

    - a sensor (154, 754) for detecting the coded magnetic signal and producing an output signal rich is proportional to the speed of rotation of the shaft;

    - a sensor support (152, 452, 552) which is of a partially enclosing configuration; and

    - an attachment device (190, 690) which is so designed as to permit rapid removable fixing of the sensor support (152, 452, 552) to the fixed part of the bearing.

7. An assembly according to any one of claims 1 to 6 characterised in that it comprises a seal (160, 260, 360, 460, 760) which has a sealing element (161, 461, 761) and a metal support (165, 465), said sealing element (161, 461) comprising an external annular portion (162, 462) which is connected to an internal annular portion (164, 464) by a radial portion, said sealing element being fixed to said support in such a way that the annular portion (162) of the seal is force-fitted on the external surface of one of the axial ends of said external ring (112).

8. An assembly according to claim 7 characterised in that the seal (760) is mounted in the interior of one of the axial ends of said external ring (712).

FIG. I

FIG. 2

FIG. 3

10

FIG. 4

FIG. 5

152

188

198          198

152          154

FIG. 6

FIG. 7

FIG. 8

**FIG. 9**

**FIG. 10**

16

FIG. 11

FIG. 12

FIG. 13

FIG. 14

FIG. 15

FIG. 16

FIG. 17

FIG. 18

FIG. 19

FIG. 20